# EUROPEAN PATENT APPLICATION

(11) **EP 2 778 925 A2**
(43) Date of publication of application: **17.09.2014**
(21) Application number: 14159985.2
(22) Date of filing: 14.03.2014
(51) Int. Cl.: G06F 11/07, G06F 11/32

(54) **Dashboard notifications on management console during a remote control session**

(30) Priority: 15.03.2013 US 201361798584 P
(71) Applicant: Aetherpal Inc., South Plainfield, NJ 07080 (US)
(72) Inventor: Gonsalves, Deepak, Bridgewater, NJ New Jersey (US); Charles, Calvin, Piscataway, NJ New Jersey (US); Ayyalasomayajula, Subramanyam, Kendall Park, NJ New Jersey (US); Chengappa, Pooja, Edison, NJ New Jersey (US)
(74) Representative: Johansson, Magnus

(57) **Abstract**

Disclosed is a web-based dashboard notification application for real-time presentation and remote management of mobile devices connected to a management console. A method for providing dashboard notifications during a remote control session includes establishing a remote control session between a management console and a mobile device. The management console requests device information and sends the device information to a dashboard execution service. A dashboard model is requested based on the device information, where the dashboard model is a set of workflows. A set of workflows is executed on the device information to verify the device information against predetermined values. The output data model is bound to a view to create a dashboard notification, which is displayed on the management console. The dashboard notification is a visual representation of a health of the mobile device.

## Description

### CROSS REFERENCE TO RELATED APPLICATIONS

This application claims the benefit of U.S. provisional application No. 61/798,584, filed March 15, 2013, the contents of which are hereby incorporated by reference herein.

### TECHNICAL FIELD

This application is related to mobile wireless communication devices and, in particular, to data presentation systems, processes, and methods with mobile wireless communication devices and dashboard notifications on management console during a remote control session.

### BACKGROUND

Mobile devices like smartphones, laptops and tablets are used by a vast majority of people for convenience, usability and for the various functions they offer. A mobile device has an Operating System and is generally equipped with additional capabilities such as Wi-Fi, Bluetooth, Global Positioning System (GPS), camera, radio-frequency identification (RFID), smart card readers and the like and run various application software that enable these capabilities. Like all electronic devices, mobile devices are susceptible to various software and hardware issues.

The majority of customers are generally not skilled in trouble shooting issues that are considered technically advanced in nature. Hence, when customers have a problem with their mobile devices, they call customer support to resolve their issues. In order to provide a personalized customer care experience, a customer support representative engages remote control applications and services, when applicable, to visually inspect the nature of the issue.

To identify a perceived issue, the customer support representative typically inspects the health of the mobile device and its components that include memory utilization, central processing unit (CPU) utilization, active applications running in the background, battery drain rate, and the like. Each of these tests or activities involves reviewing the data received from the mobile device and making a judgment on the observed value. This process is time consuming and can increase the overall average handling time (AHT) of the customer support call. Customer support staff will need an efficient way to identify issues immediately during a remote control session. It is desirable to have a system which can automatically verify and validate the features and components of the mobile device and provide a concise dashboard that encompasses the overall state of the mobile device.

### SUMMARY OF THE INVENTION

Described herein is a dashboard notification method and system through which a customer support agent or representative is able to detect anomalies with a remote controlled device and is presented with a visual representation of the anomalies with suitable remedial actions. The dashboard system works in conjunction with a Virtual Mobile Management (VMM) system. During a remote control session, the mobile device is requested to provide information about different components of the mobile device. This is used by the dashboard system to verify if the mobile device is functioning optimally. When a technical issue is discovered on the mobile device, the dashboard system provides the ability to perform corrective actions on the mobile device to fix the issues faced by the customer or user. The dashboard system includes built-in intelligence to observe frequently occurring issues on the mobile device and to keep track of the corrective actions taken over a period of time. This allows the dashboard system to dynamically modify and enhance itself.

The system allows an authorized user with administrator privileges to create dashboard models and dashboard views as workflow activities. The workflow activities provide the ability to analyze the incoming device information data and verify if the data meets the expected standards. The system can identify missing configurations necessary for the mobile device to function optimally. The workflow processes may contain intelligence to modify incorrect settings on the mobile device and add missing configurations to ensure proper function of the mobile device. Some examples of such actions could be the detection of an older operating system (OS) version as a candidate for upgrade, detection of resource utilization thresholds, detection and correction of access point name (APN) settings, and the like. Dashboard views define how a dashboard notification should be presented on the customer support user interface. The dashboard system allows the administrator to create dashboard views to display the results of the workflow processes in the most optimal way.

Another component of the dashboard notification system monitors the dashboard workflows that get executed regularly and also tracks the corrective actions taken on the device. It maintains statistical records of all the workflows and data models that are executed and employs predictive analytics to analyze the nature of device components that are more prone to technical issues. Dashboard system allows rules to be created by an administrator that dictate how the system should utilize the statistical data and create dynamic dashboard models and views.

Objectives and advantages of this invention will become apparent from the following description taken in conjunction with the accompanying drawings wherein are set forth, by way of illustration and example, certain embodiments of this invention. The drawings constitute a part of this specification and include exemplary embodiments of the present invention and illustrate various objects and features thereof.

### BRIEF DESCRIPTION OF THE FIGURES

A more detailed understanding may be had from the following description taken in conjunction with the accompanying drawings wherein are set forth, by way of illustration and example, certain embodiments. The drawings constitute a part of this specification and include embodiments and illustrate various objects and features thereof.
Figure 1 illustrates an example overall architecture of a virtual mobile management (VMM) system;
Figure 2 shows an example of a connection end point gateway in accordance with some embodiments;
Figure 3 shows an example of an admin and control function in accordance with some embodiments;
Figure 4 shows an example of a routing and authentication function in accordance with some embodiments;
Figure 5 illustrates a VMM client protocol architecture of a mobile device in accordance with some embodiments;
Figure 6 illustrates the details of a VMM client session layer in accordance with some embodiments;
Figure 7 illustrates the details of a VMM client link layer in accordance with some embodiments;
Figure 8 illustrates an overall process of end-to-end VMM-remote control (RC) session establishment in accordance with some embodiments;
Figure 9 illustrates an overall process of VMM-RC session termination in accordance with some embodiments;
Figure 10 illustrates a call flow and interaction during a dashboard notification process in accordance with some embodiments;
Figure 11 illustrates an overall architecture of a dashboard notification system in accordance with some embodiments;
Figure 12 illustrates an architecture of a dashboard execution service in accordance with some embodiments;
Figure 13 illustrates a method for creating processes with the workflow designer in accordance with some embodiments;
Figure 14 illustrates a method for creating workflows using predefined processes in accordance with some embodiments;
Figure 15 illustrates a flow of control when a dashboard notification is triggered in accordance with some embodiments;
Figure 16 illustrates a call flow for taking corrective action on the device if an issue occurs in accordance with some embodiments;
Figure 17 illustrates a process of defining rules for dynamic dashboard generation in accordance with some embodiments;
Figure 18 illustrates a process of publishing workflow execution data and corrective results to the data point access system in accordance with some embodiments;
Figure 19 illustrates a dashboard system call flow when corrective results are utilized for auto generation of dashboard model in accordance with some embodiments;
Figure 20 illustrates an example use case of detecting if the mobile device is connected to a proper functioning charger in accordance with some embodiments;
Figure 21 illustrates an example use case of detecting applications on the mobile device that utilize memory and CPU beyond a pre-defined threshold in accordance with some embodiments; and
Figure 22 illustrates an example of a dashboard notification view in accordance with some embodiments.

### DETAILED DESCRIPTION

It is to be understood that the figures and descriptions of embodiments have been simplified to illustrate elements that are relevant for a clear understanding, while eliminating, for the purpose of clarity, many other elements. Those of ordinary skill in the art may recognize that other elements and/or steps are desirable and/or required in implementing the embodiments. However, because such elements and steps are well known in the art, and because they do not facilitate a better understanding of the embodiments, a discussion of such elements and steps is not provided herein.

In general, when a mobile device customer calls in to complain about issues encountered on the mobile device, the customer support may perform a remote control session on the mobile device using a virtual mobile management (VMM) system. During this remote connection, the mobile device is requested to provide detailed information about its various components and functions. At this point, the customer support agent or representative (CSR) can manually view and analyze the incoming information to detect any inconsistencies which might be causing an issue on the mobile device. The process of manually verifying and analyzing a huge amount of data could be a tedious and time consuming procedure. The dashboard system makes the troubleshooting and validation process a seamless experience by automating the entire process and also providing corrective solutions. The system copes with real-time intelligent troubleshooting for the user to request remote support that allows customer support representatives or end users to recognize and solve the possible troubles faster and decrease device return rate and reduce the Average holding time (AHT) of the call.

The dashboard system will receive the mobile device information as an input and will pull the necessary dashboard model workflow that needs to be executed on the mobile device information data. The model determines if the data complies with the pre-determined industry standards. These pre-determined industry standard values are stored in the data repository. Any discrepancies detected are notified to the CSR via a notification on the CSR user interface (UI). The CSR can choose to manually make the necessary changes on the mobile device or allow the dashboard system to perform corrective actions on the mobile device automatically.

During a VMM session, a dashboard agent which resides on the console makes a request to the mobile device to retrieve device data. This data retrieved from the device is then transferred to the dashboard execution service, which employs the services of a dashboard model service to execute a dashboard model with this device data. Dashboard models are pre-configured workflows where each element within the workflow is an activity or a process consisting of a set of instructions that contains the logic to interpret, parse and execute these instructions on the input data. The resultant output or data model is returned back to the dashboard execution service, which will bind the data model to a view retrieved from the view cache to create a dashboard. This dashboard is forwarded to the console to be presented to the customer support representative.

In an illustrative example, a customer of a mobile device calls in with issues on the mobile device such as, for example, random mobile device freeze, frequent connection interruptions, slow battery charge, inability to install new applications on the mobile device, and the like. The CSR would use the VMM system to remotely connect to the mobile device that has these issues. The dashboard system processes the incoming mobile device information and compares it with the pre-defined standard values. For the issues mentioned above, random mobile device freeze could be a result of certain applications or a combination of applications utilizing memory and central processing unit (CPU) beyond the recommended threshold. The frequent internet connection breaks could be a result of an incorrect access point name (APN) configuration. A slow charging battery could be a result of using cheap generic chargers which might be using the incorrect voltage to charge the mobile device. Inability to install new applications might be a result of low storage on the mobile device. The dashboard system can detect the root cause of all the issues by executing the appropriate dashboard workflow models on the mobile device information. It could also find additional issues that the customer might not be aware of hence preventing future repeat customer calls. In some cases, the system could also suggest solutions to fix the issues or perform the correction actions on the mobile device automatically like performing a software update when an old software version is detected, or terminating processes and uninstalling rogue applications that might be over utilizing system resources.

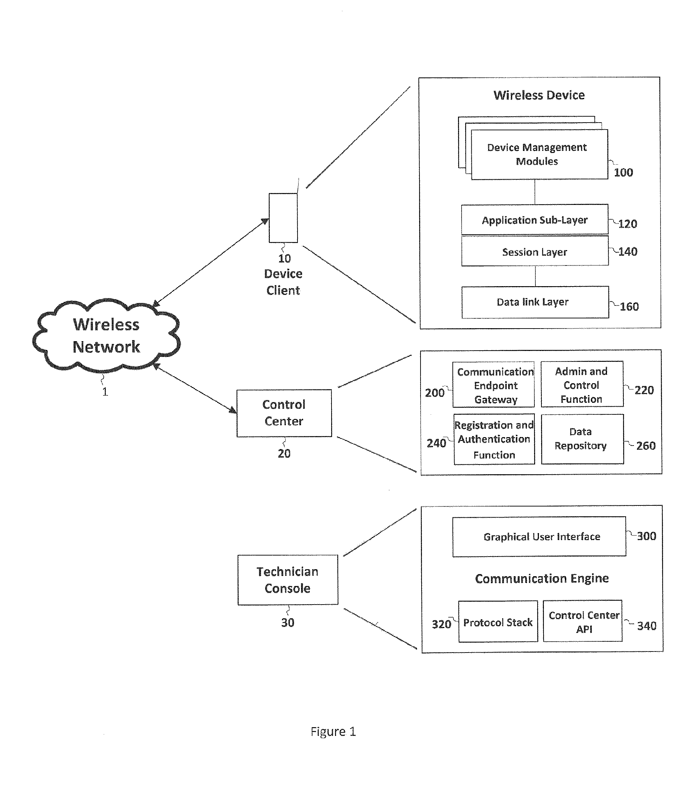

Figure 1 is an example overall architecture of a VMM or VMM remote control (VMM-RC) (referred to as VMM herein) system which comprises at least a device client residing inside a device (collectively device client/client 10), a control center system 20 and a technician console 30. The device 10 communicates with the control center 20 through a wireless network 1. CSRs at the technician console 30 interact with the remote devices 10 through the control center 20 services that mediate communication between the technician console 30 and the remote devices 10. The VMM is a powerful tool designed to be used by the CSRs to remotely view and control the mobile devices.

The control center system 20 is responsible for data management, device management, web services, analytics, security management, administrative services and device connectivity. The components of the control center system 20 include a communication end point gateway (CEG) 200, an admin and control function (ACF) or entity 220, a registration and authentication function (RAF) module or entity 240 and a data repository 260. The gateways, modules and/or entities are implemented as or in processors, servers and/or any computing device or system.

The primary responsibility of CEG 200 is to manage and mediate sessions. The CEG 200 or server provides communication endpoints between device 10 and technician console 30. This allows for multiple requests to be serviced within one session from multiple instances of technician console 30. The CEG 200 provides a consistent manner of device connection and tool service in a system with heterogeneous devices running different operating systems. The CEG 200 provides load balancing across multiple (as described herein below), on each CEG 200 in order to minimize single point of failure.

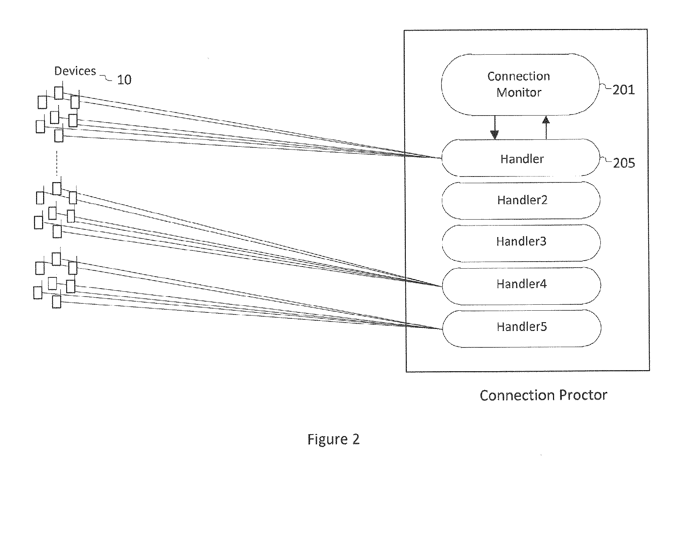

Figure 2 shows an example embodiment of a CEG 200, which may include at least a connection monitor 201 and connection handlers 205. The connection monitor 201 creates and manages connection handlers 205, creates session IDs for new connection requests and monitors all the scheduled and existing sessions with devices 10. By default, a connection handler 205 is setup for every CEG 200, where the number of connection handlers 205 is configurable. All the sessions are load distributed across the connection handlers 205. Each connection handler 205 handles multiple device sessions. The connection handler authenticates inbound connections, and mediates VMM session traffic between device 10 and technician console 30.

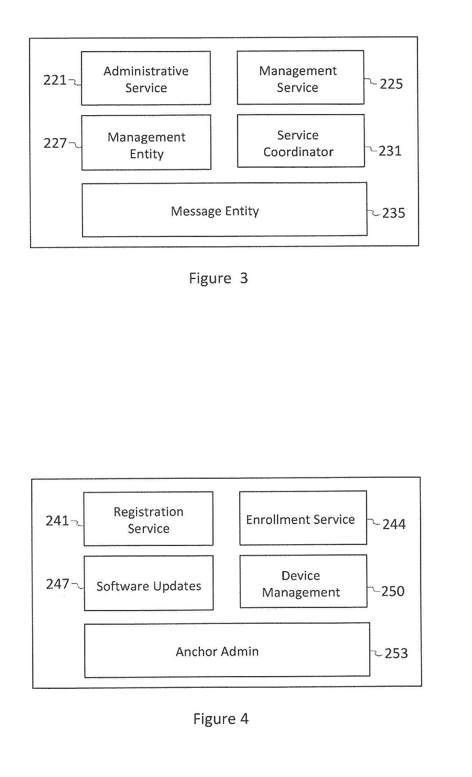

Figure 3 shows an example embodiment of an ACF 220. The ACF 220 is responsible for the administration, management and authorization of communication between the control center 20 and the devices 10. The ACF 220 may include an administrative service 221, a management service 225, a management entity 227, a service coordinator 231 and a message entity 235.

The administrative service 221 is designed to be a central administrative entity of the entire virtual mobile management system. Through this service, system administrators perform administration, management and instrumentation of all the servers within the system, create and maintain multiple tenants, assign tenant administrator roles, and other like functions.

The management service 225 provides the operational endpoint to the system. The management service 225 performs load distribution among the CEG 200, management of device registration, administration of devices, administration of users, zones, policies, roles, and the like and session queuing.

The management entity 227 component is responsible for providing the management service 225 with an in-memory data store for key operational data such as an access control list (ACL), user/group/zone structures, and the like.

The service coordinator 231 coordinates the communication between various elements within the VMM. It provides the database interface to the RAF 240 in the control center 20. All services register themselves with the service coordinator 231. The service coordinator 231 is responsible for service discovery.

Figure 4 shows an example embodiment of a RAF 240. The RAF 240 provides a single point of entry for all devices for enrollment and authentication services during a VMM session. The RAF 240 may include a registration service 241, an enrollment service 244, a software updates function 247, a device management entity 250, and an anchor admin 253.

During auto-enrollment, devices are required to register themselves with the registration service 241, prior to enrolling themselves. The enrollment service 244 is responsible for enrolling registered devices with the system. The enrollment process is described herein below. The software updates module 247 manages the various client packages in the system. Devices connect to this service to request for client updates. If an update is available, the software updates module 247 will provide the appropriate client download link. The device management entity 250 provides the enrolled devices an interface to update its parameters in the system such as the mobile directory number (MDN) when the device detects a change. The anchor admin 253 provides the administration component.

The data repository 260 is the data warehouse that stores the information about the VMM mobile devices, server configuration, tasks and status settings. The data repository is pivotal for configuring and updating managed devices and server components. It is also responsible to maintain the user login information as well as device authentication information.

In particular, the data repository 260 stores all the information about the devices 10, server configuration, tasks and status settings. The data repository 260 is pivotal to configure and update managed devices and server components. It is also responsible for maintaining the device authentication information. The data repository 260 may comprise three database (DB) elements: an admin DB, operations (Ops) DB, and a reports DB. The admin DB maintains all the system configurations, tenant configuration and management information, system administration and server instrumentation data. This database is accessed by the administrative service. The Ops DB maintains data that is required for the operations of the system such as device enrollment, device information, user details and the like. This database is accessed by the management service and the service coordinator. The reports DB contain historical data of device enrollment, session, audit, report views, and the like.

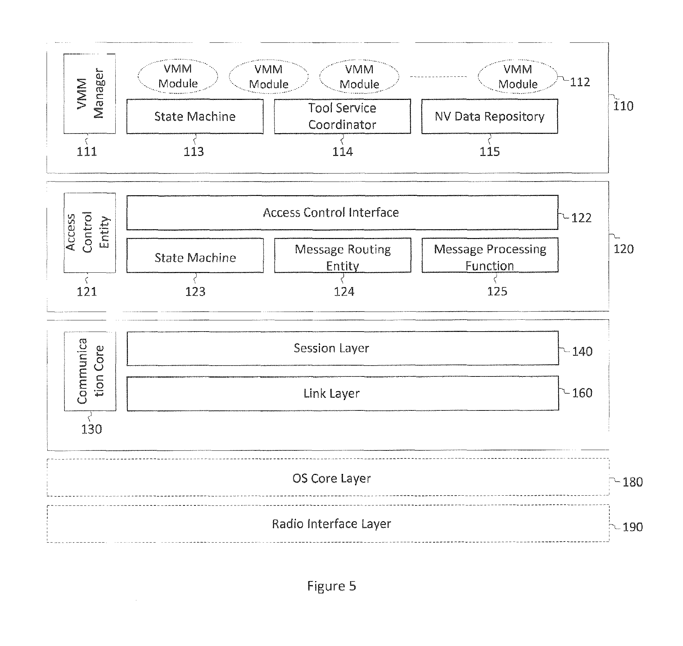

Figure 5 illustrates a VMM client protocol architecture of device client 10. The VMM device client architecture may include protocol layers and function blocks such as VMM layer 110, access control interface layer 120, communication core 130, Session layer 140, Link Layer 160, OS Core Layer 180 and a Radio Interface layer 190.

The VMM manager 111 encapsulates functional entities that provide the communication and protocol frameworks that are necessary for providing client services. The VMM manager 111 primarily handles bearer plane traffic. The VMM manager 111 may include VMM modules 112, a state machine 113, a tool service coordinator 114 and a non-volatile (NV) data repository 115. The VMM modules 112 provide a multitude of tool services. The tool services are grouped together that exhibit common functionality such as remote control, file manager, device management, and the like. Each tool service maintains an instance of the state machine 113. A state machine 113 defines a set of shared states that the tool service on the device application shares with the server. The tool service coordinator 114 maintains a collection of active tool service instances that are currently being serviced by the VMM application. The tool service coordinator 114 entity maintains the lifetime of all tool services, and is responsible in creating and destroying tool services. The NV data repository 115 stores authentication and authorization specific data that is shared between the VMM application and the server. The NV data repository 115 also serves the purpose of maintaining tool service configuration as well as VMM configuration data.

The access control entity (ACE) 121 provides a set of functions to the tool services to communicate with the control center 20. The access control entity 121 provides encapsulation of messages before forwarding it to the communication core 130. The access control entity 121 layer is responsible for invoking an instance of the communication core layer 130 and provides a state machine 123 that defines the state of the VMM application.

An access control interface (ACI) 122 provides a set of standard Application Programmer Interface or API to the tool services. These API provide a consistent communication platform to facilitate both synchronous as well as asynchronous communication. A state machine 123 identifies the overall state of the VMM application. The state transitions within the ACE state machine 123 trigger events that are handled by the VMM layer 110. The states are open and closed and traffic flows through the ACI layer 120 only in the open state. A message routing entity 124 is responsible for routing all signal messages, destined to tool services to the respective event handlers. A message processing function 125 is a signal message pre-processor. This entity receives signal messages from a session layer 140 destined towards tool services. It de-frames these messages prior to forwarding it to the message routing entity 124 to apply routing rules. Messages that are destined for the server from tool services are encapsulated here.

The communication core layer 130 setups and maintains a dedicated communication channel with the control center 20. The communication core layer 130 provides the necessary framework to transport messages between the upper layers 110 and 120 and the control center 20. The communication core layer 130 provides message encapsulation, framing, fragmentation and packet reconstruction of tool service messages. The communication core layer 130 includes a session layer 140 and a link layer 160.

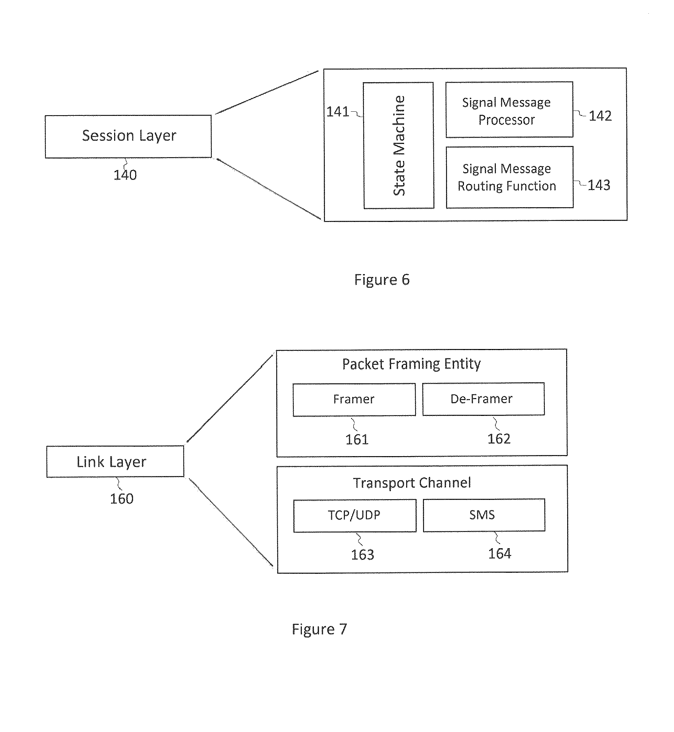

Figure 6 is an example embodiment of the session layer 140 and may include at least a state machine 141, signal message processor 142 and signal message routing function 143. The session layer 140 maintains a set of shared states between the CEG 200 and the VMM module 112 of Figure 5. The session layer 140 packets encapsulate signal messages that are transported between the CEG 200 and the VMM module 112. Each message within a session layer packet defines the source and destination to which the signal messages are to be delivered.

The state machine 141 maintains a state within a predefined set of shared states between the device client application 10 and the CEG 200. The state changes within the state machine 141 trigger the execution of state transition procedures within the VMM module 112.

The signal message processor 142 encapsulates and processes signal messages that are transmitted between the CEG 200 and the VMM module 112. The signal message processor 142 influences the state transition within the state machine 141 by altering its state. The signal messages destined to the VMM modules 112 are forwarded to the signal message routing function 143.

The signal message routing function 143 forwards signal messages to the appropriate destination. The signal messages destined to VMM modules 112 are directly forwarded to the tool service coordinator 114 and the signal messages destined to the CEG 200 are forwarded to the link layer 160.

Referring back to Figure 5, the link layer 160 establishes and maintains a dedicated communication channel between the client and the CEG 200. The link layer 160 encapsulates all messages within its frame prior to forwarding it to the network. The packets that are received by the link layer 160 from the network are reconstructed and de-framed prior to forwarding it to the upper layers 110 and 120. The link layer 160 checks for message integrity.

Figure 7 shows an example embodiment of the link layer 160, which includes at least a packet framing entity and a transport channel. The packet framing entity encapsulates messages in link layer frames and forwards these frames to the transport channel, which in turn forwards the frames to the network. The packet framing entity includes at least a framer 161 and a de-framer 162. When a network packet is received by the packet framing entity, the packet framing entity inspects the packet and verifies the integrity of the packet. Malformed packets are silently discarded.

The transport channel includes at least a Transmission Control Protocol (TCP) and User Datagram Protocol (UDP) entity 163 and a Short Message Service (SMS) entity 164. The transport channel binds to the appropriate transport layer of the underlying operating system, which is dependent upon the VMM tool service. The transport channel forwards messages to the network layer and receive messages from the network layer. It provides notification to the upper layer of the state of the network layer through asynchronous events. This functionality is done using at least the TCP/UDP entity 163 and SMS entity 164, which are implemented using techniques known to one of ordinary skill in the art.

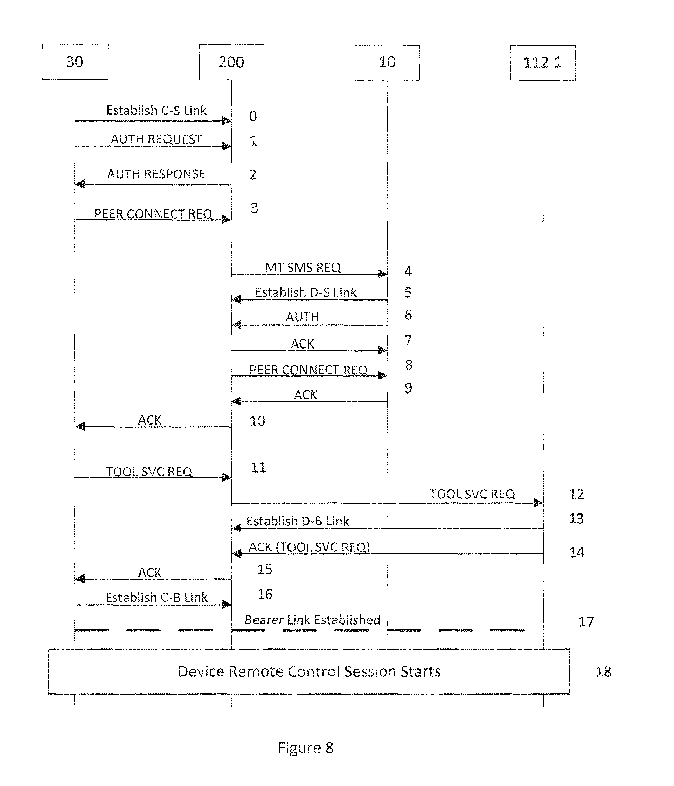

Figure 8 illustrates an example overall process of an end-to-end VMM session establishment between a technician console 30, a CEG 200, a device 10 and a VMM module 112.1. A control signal (C-S) link is established between a CEG 200 and a technician console 30 (0). An Authentication Request is received by the CEG 200 from the technician console 30 (1) and an Authentication Response is sent by the CEG 200 to the technician console 30 (2). A PEER_CONNECT_REQ signal is received by the CEG 200 from the technician console 30 (3). The CEG 200 sends a Mobile Terminated SMS to a device 10 (4). The CEG 200 receives a data signal (D-S) link connection request from the device 10 (5). An Authentication Request is received by the CEG 200 from the device 10 (6). An Authentication Response (shown as an ACK) is sent by the CEG 200 to the device 10 (7). A PEER_CONNECT_REQ signal sent by the CEG 200 to the device 10 (8). An acknowledgement (ACK) is received by the CEG 200 from the device 10 (9). An ACK is transmitted by the CEG 200 to the technician console 30 (10). A TOOL_SVC_REQ is received by the CEG 200 from the technician console 30 (11). A TOOL_SVC_REQ is relayed by the CEG 200 to the VMM module 112.1 (12). The CEG 200 receives a data bearer (D-B) link connection from the VMM module 112.1 (13). The CEG 200 receives an ACK from the VMM module 112.1 for the TOOL_SVC_REQ (14). An ACK is relayed by the CEG 200 to the technician console 30 (15). The CEG 200 receives a control bearer (C-B) link connection request from the technician console 30 (16). At this point, the control plane and bearer plane links are established (17) and VMM bearer data is carried over the bearer channels, D-B and C-B (18).

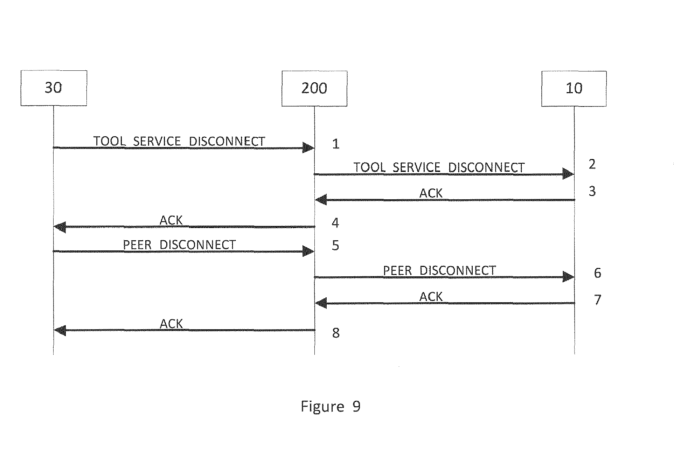

Figure 9 illustrates an example VMM remote session termination between a technician console 30, a CEG 200, and a device 10. In this illustrative example, a CSR or technician, operating the technician Console 30 initiates a VMM service disconnection. A TOOL SVC DISCONNECT is sent from the technician console 30 to the CEG 200 (1) and relayed by the CEG 200 to the device 10 (2). An ACK is received by the CEG 200 from the device 10 (3) and is relayed to the technician console 30 (4). A PEER DISCONNECT is sent from the technician console 30 to the CEG 200 (5) and relayed by the CEG 200 to the device 10 (6). An ACK is received by the CEG 200 from the device 10 (7) and relayed by the CEG 200 to the technician console 30 (8). At this time, all channels are disconnected and the VMM session is closed or terminated.

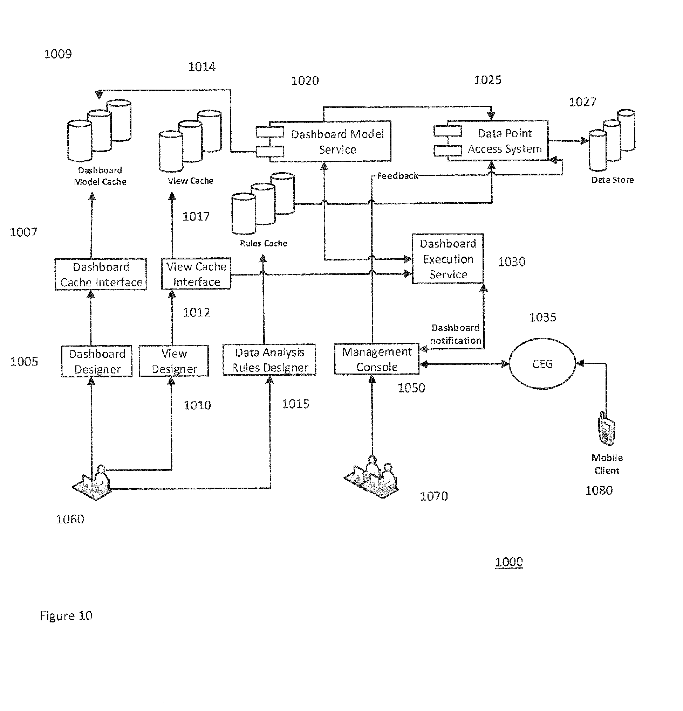

Figure 10 illustrates an example embodiment of a dashboard notification system 1000 and works in conjunction with the VMM system described herein above. The dashboard notification system 1000 includes at least: a dashboard designer 1005 connected to a dashboard cache interface 1007 and further connected to a dashboard cache 1009; a view designer 1010 connected to a view cache interface 1012 further connected to a view cache 1014; and a data analysis rules designer 1015 connected to a rules cache 1017. The dashboard notification system 1000 further includes a dashboard model service 1020 that is connected to the dashboard cache 1009, a data point access system 1025 and a dashboard execution service 1030. The data point access system 1025 is connected to a data store 1027; the rules cache 1017; and receives feedback from a management console 1050. The dashboard execution service 1030 is connected to the view cache interface 1012 and an anchor service 1035. The dashboard execution service 1030 sends notifications to the management console 1050.

In general, an authorized user 1060 creates dashboard model, view and execution rules using the dashboard designer 1005, the view designer 1010 and the data analysis rules designer 1015, respectively. A CSR 1070 initiates a VMM session and the management console 1050 retrieves device information from the mobile device 1080 through CEG 1035. The management console 1050 invokes the dashboard notification system through the dashboard execution service 1030. The dashboard execution service 1030 forwards the request to the dashboard model service 1020. The dashboard model service 1020 selects a model from the dashboard model cache 1009 and executes it against the device information data. The data point access system 1025 uses statistical data from a data store 1027 and applies predictive techniques to influence the execution and behavior of the dashboard model workflow. The resulting data model is returned to the dashboard execution service 1030. The dashboard execution service 1030 combines the model with a view, retrieved from the view cache interface 1012, and returns the resulting dashboard to the management console 1050. The management console 1050 displays the notification to the CSR 1070.

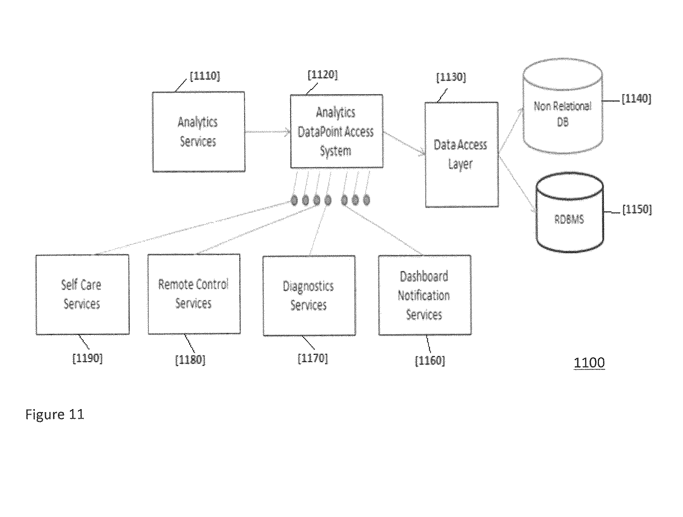

Figure 11 illustrates an example overview of a dashboard notification system architecture 1100. The system 1100 includes at least an analytics services 1110, an analytics data point access system 1120, a data access layer 1130, a non-relational database 1140, a relational database (RDMS) 1150, a dashboard notification services entity 1160, a diagnostics services 1170, a remote control services 1180 and a self-care services entity 1190.

The analytics services 1110 executes business rules and generates data that is aggregated into the data point access system 1120. The data point access system 1120 serves as the data registry and provides a consistent data access interface to services that require the analytics data. The data is conceptually stored and accessed as a data tree, with each leaf node representing a data point. The data access layer 1130 provides the interface to the database systems, i.e. the non-relational database 1140 and the RDMS 1150. The self-care services 1190 define a list of services that provide self-care workflow to both the CSRs as well as to the customer. The remote control services 1180 provide the CSRs with the ability to remotely connect and take complete control of the subscriber's device. These services are currently deployed within the VMM system. The dashboard notification services 1160 provide a minimal and useful user interface device data snapshot on the management console "focus area". The CSR can use this data to effectively troubleshoot the device.

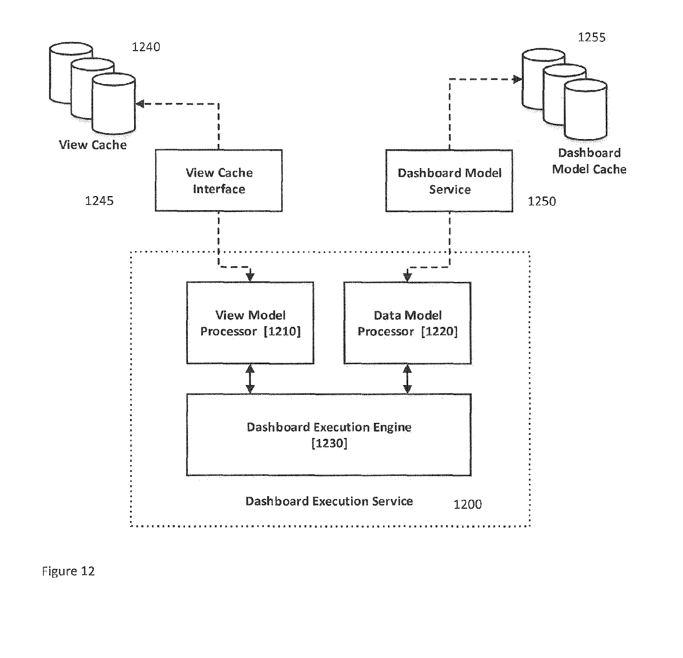

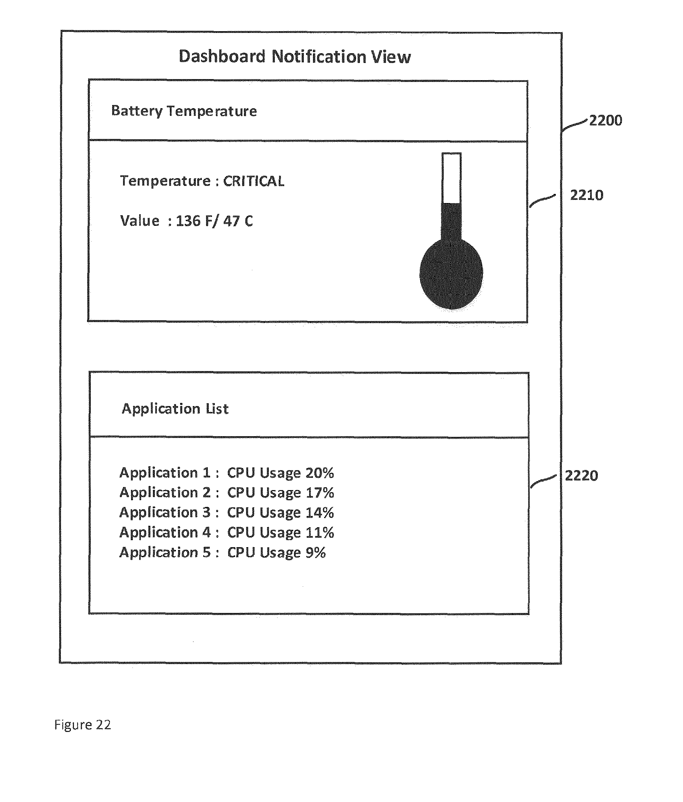

Figure 12 describes an example architecture of a dashboard execution service 1200 (as shown in Figure 10) and its components. The dashboard execution service 1200 includes at least a view model processor 1210, a data model processor 1220 and a dashboard execution engine 1230. The view model processor 1210 abstracts the user interface presentation logic from the data and is connected to a view cache 1240 through a view cache interface 1245. The view is a graphical user interface set as a template. For example, Figure 22 shows an example of a dashboard notification view 2200. A battery temperature notification 2210 and an Application list notification 2220 are displayed together in the dashboard notification view (2200).

The data model processor 1220 interfaces with a dashboard model service 1250 and dashboard cache 1255. The data model processor 1220 contains the implementation logic that will define how to interpret and parse the executed dashboard model that it receives from the dashboard model service 1250.

The dashboard execution engine 1230 applies the view received from a view model processor 1210 to the dashboard model received from the data model processor 1220 and creates a dashboard notification. The dashboard execution engine 1230 further binds controllers to the dashboard model and view thus creating a self-contained dashboard in a Model-View-Controller (MVC) pattern. A controller can send commands to the model to update the model's state. It can also send commands to its associated view to change the view's presentation of the model.

Referring now also to Figure 10, the dashboard execution service 1200 receives a request for a dashboard from the management console 1050. The request is forwarded to the data model processor 1220, which in turn forwards the request to the dashboard model service 1250. The dashboard execution service 1200 model service 1250 executes a dashboard workflow and combines a view model and a dashboard model. Upon receipt of the dashboard model, it applies the view and binds the controllers, which is then forwarded to the management console 1050.

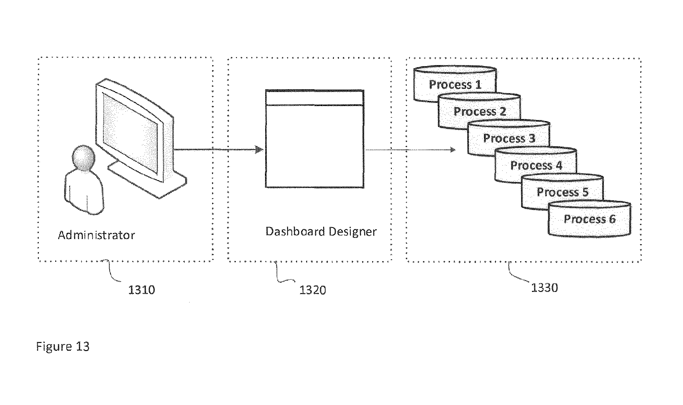

Figure 13 describes an example method for creating processes using a dashboard designer tool 1320. An authorized user 1310 with administrator privileges 1310 logs into the dashboard designer tool 1320. The authorized user 1310 creates a collection of processes or activities 1330 which are a set of instructions that are executed on the input data. An example of such processes could be temperature comparers, charger verifiers, percentage filters and so on.

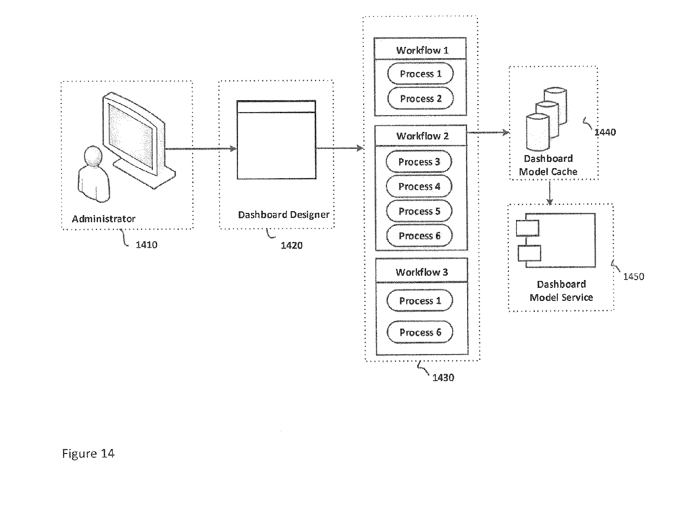

Figure 14 describes an example method for creating dashboard models using a dashboard designer tool 1420. An authorized user 1410 with administrative privileges logs into the dashboard design 1420. Using the existing processes, the authorized user 1410 can create dashboard models as workflow activities 1430 that trigger a dashboard notification when specified criteria is satisfied. An example of such a workflow could be to collect the battery temperature of the device from the incoming device details, compare the battery temperature with pre-determined threshold values and to verify if a valid charger is being used to charge the battery. The workflow could also contain methods to undertake corrective actions on the device. The created models are stored in a dashboard model cache 1440. These models can be retrieved from the dashboard model cache 1440 when necessary by a dashboard model service 1450.

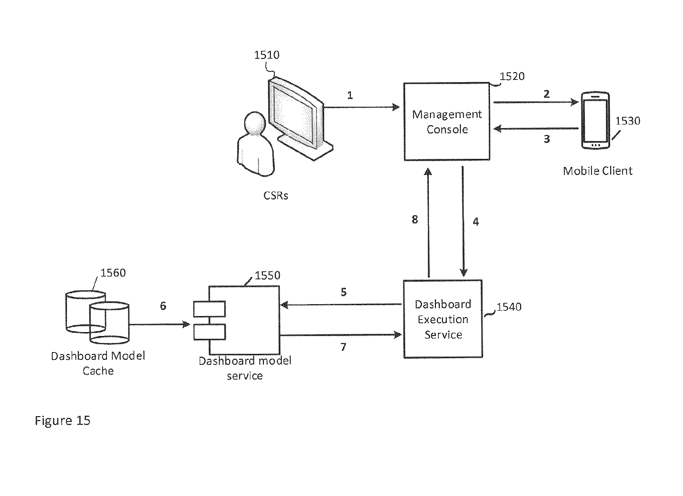

Figure 15 describes an example control flow when a dashboard notification is displayed on a management console 1520. A CSR 1510 logs into the management console 1520 and initiates a remote control session with a mobile device 1530 (1). The device client 1530 is requested to forward its detailed specifications to the management console 1520 (2). The device client 1530 responds back with a full list of detailed specifications which might include hardware and software specifications (3). This detailed information is transferred to a dashboard execution service 1540 (4). The dashboard execution service 1540 examines the incoming information and requests the appropriate dashboard model that needs to be executed from the dashboard model service 1550 (5). The dashboard models are retrieved from the dashboard model cache 1560 (6) and returned back to the dashboard execution service 1540 (7). The workflows are then executed to determine if the incoming device information meets pre-determined standards. A dashboard notification is triggered and displayed on the management console 1520 when the device information is incorrect or does not match the pre-determined values (8).

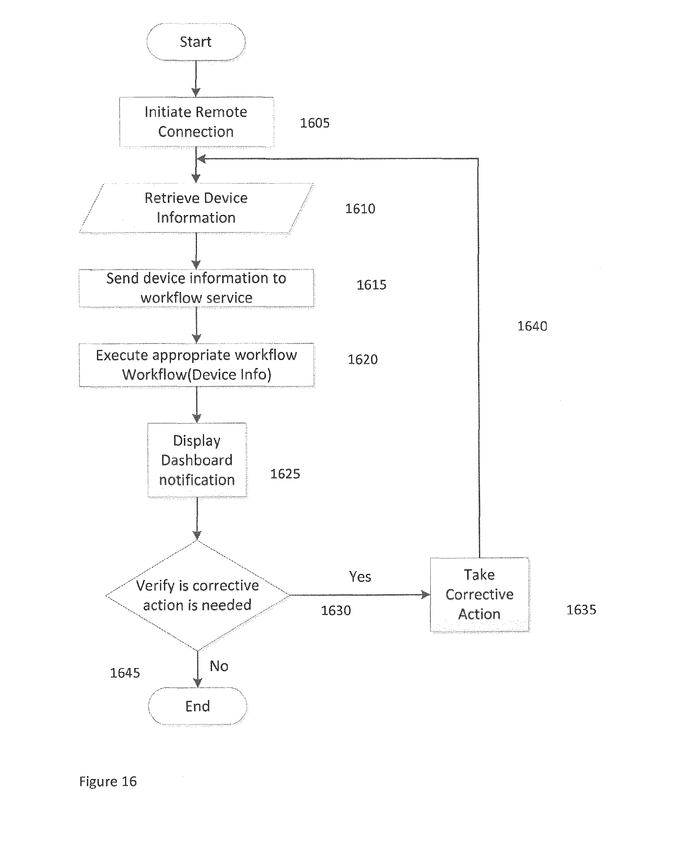

Figure 16 describes an example procedure or method executed when a triggered dashboard notification requires a corrective action on a mobile device. An example of such a scenario may be when an application on the mobile device is utilizing an alarming amount of CPU time or processes. A remote control connection is established between a management console and the device client on the mobile device (1605). The management console requests the detailed device information from the mobile device (1610). Once this information is received, the management console sends this information to a dashboard execution service (1615). The dashboard execution service executes the appropriate workflows on the device information received to determine if the mobile device is functioning as expected (1620). The dashboard notifications are displayed on the management console when the device information does not match the pre-determined values (1625). It is then determined if a corrective action is required on the mobile device by the dashboard execution service. If yes (1630), corrective action is performed on the device by the dashboard execution service (1635). The device is then requested for the detailed device information again to verify if the corrective action fixed the issue on the device (1640). If no, then no actions are performed (1645).

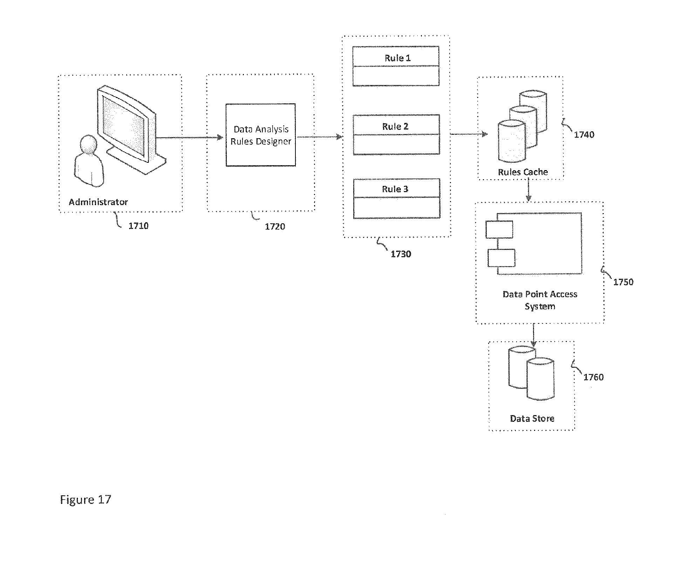

Figure 17 describes an example process for creating rules using the data analysis rules designer in order to provide the dashboard system with the ability to perform predictive analysis of the device data. An authorized user or administrator 1710 creates rule sets 1730 using a data analysis rules designer 1720. The rules get stored in a rules cache 1740 and can be accessed from a data point access system 1750. The rule sets govern the behavior and execution of the dashboard. The rules are executed in the data point access system 1750. The data point access system 1750 uses statistical data from a data store 1760 and applies predictive techniques to influence the execution and behavior of the dashboard.

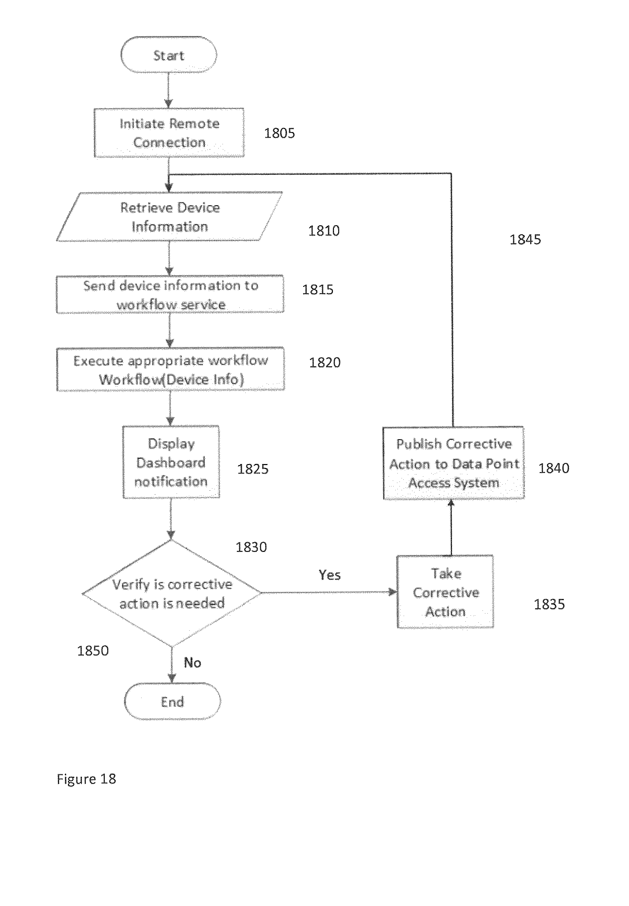

Figure 18 describes an example procedure or method of publishing corrective actions taken on a mobile device into a data point access system for future predictive analysis. A remote control connection is established between a management console and a device client (1805). The management console requests the device for detailed device information (1810). Once this information is received, the management console sends this information to the dashboard execution service (1815). The dashboard execution service executes the appropriate workflows on the device information received to determine if the device is functioning as expected (1820). Dashboard notifications are displayed on the management console when the device information does not match the pre-determined values (1825). It is then determined if a corrective action is required on the device by the dashboard execution service. If yes (1830), corrective action is performed on the device by the dashboard execution service (1835). Details about the workflows executed on the mobile device along with the correction actions performed on the mobile device are published to the data point access system (1840). The data point access system uses this information to create dynamic workflows and provide intelligent troubleshooting techniques for subsequent requests. The process may be repeated to confirm correctness of actions taken (1845). If no, then no actions are performed (1850).

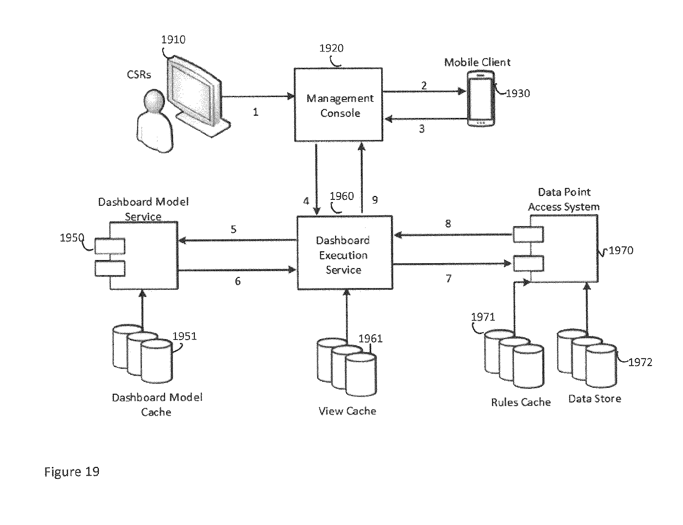

Figure 19 describes an example dynamic dashboard generation sequence. A mobile device 1930 is in a VMM-RC session with a CSR 1910. The CSR 1910 activates the console 1920 to request device information data (1). In an embodiment, the device information data can also be requested automatically by the console 1920 without the CSR's 1910 intervention. The mobile client 1930 receives device information data request from the console 1920 (2). The mobile client 1930 responds with device information data response (3). The device information data is forwarded to a dashboard execution service 1960 (4). The dashboard execution service 1960 requests a dashboard model from the dashboard model service 1950 and passes the device information data to the dashboard model service 1950 (5). The dashboard model service 1950 picks an appropriate dashboard model workflow from a dashboard model cache 1951 and executes or applies the device information data to the model. The resulting dashboard model is passed back to the dashboard execution service 1960 (6).

The executed model result is forwarded by dashboard execution service 1960 to a data point access system 1970 (7). The data point access system 1970 employs predictive forecasting using data from a data store 1972 and the model results and reconstructs a new dashboard model based on the derived results. The rules defined within a rules cache 1971 are executed within the data point access system 1970 and influences the type of analysis to be performed on the data.

The regenerated dashboard model is forwarded to the dashboard execution service 1960 (8). Based on the dashboard model, the dashboard execution service 1960 applies an appropriate view from a view cache 1961 to create a dashboard notification. This dashboard notification is forwarded to the management console 1920 (9), which is then displayed to the CSR 1910.

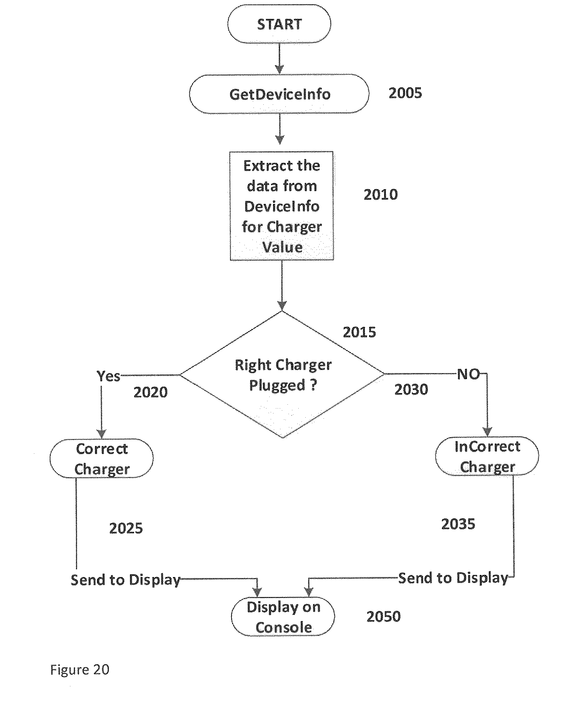

Figure 20 describes an example use case for the dashboard notification system. A dashboard agent on a management console requests device information by executing the Get Device Info command (2005). The device client returns the detailed device information to the dashboard agent. The device information is passed to the dashboard execution service. The dashboard execution service passes this information to the dashboard model service which executes the appropriate dashboard model workflow. The dashboard workflow extracts the data from the device information to get a charger value (2010). The workflow then compares this value to determine if the correct charger is plugged in and returns the resultant data model (2015). If it is determined that a correct charger is plugged in, then the correct charger data model is passed (2020). If it is determined that an incorrect charger is plugged in, then the incorrect charger data model is passed (2030). The dashboard execution service binds the appropriate view to the resultant data model to create a dashboard notification (2025, 2035). This is displayed on the console (2050).

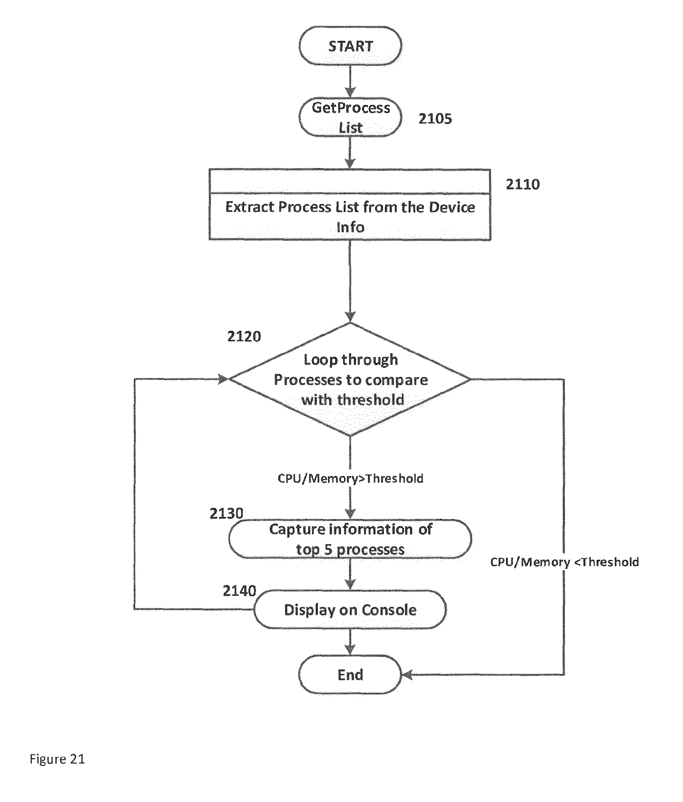

Figure 21 describes another example use for the dashboard notification system. A dashboard agent on the management console requests device information by executing the Get Process List command (2105). The device client returns the detailed device information to the dashboard agent. The device information is passed to the dashboard execution service. The dashboard execution service passes this information to the dashboard model service which executes the appropriate dashboard model workflow. The dashboard workflow extracts the data from the device information to get the process list (2010). The workflow then loops through the process list and compares CPU and memory utilization values with a threshold value (2120). If it is determined that the CPU and memory utilization is greater than the threshold value then the activity within the workflow records the top 5 processes within a data model (2130). This data model is bound to an appropriate view by the dashboard execution service and is displayed on the console (2140).

In general in an embodiment, a method for providing dashboard notifications during a remote control session includes establishing a remote control session between a management console and a mobile device. The management console requests device information from the mobile device and sends the device information to a dashboard execution service. The dashboard execution service requests a dashboard model based on the device information, wherein the dashboard model is a set of workflows. A set of workflows is executed on the device information to verify the device information against predetermined values. The output data model is bound to a view to create a dashboard notification. The dashboard notification is displayed on the management console on a condition that the device information does not meet the predetermined values. The dashboard notification is a visual representation of a health of the mobile device.

In an embodiment, the dashboard notification includes corrective actions that can be performed on the mobile device. In another embodiment, the corrective actions are automatically performed on the mobile device.

In an embodiment, a plurality of dashboard models, a plurality of views and data analysis rules are generated and stored in respective caches.

In an embodiment, statistical data and predictive techniques are used to influence execution and behavior of workflow as applied to the device information.

In an embodiment, the method tracks re-occurring issues on the mobile device, the corrective actions taken to correct the issues and the results from the corrective actions and learns from tracked issues, corrective actions and results to provide intelligence based corrective actions to the issues.

In another embodiment, the method maintains statistical records of executed dashboard models and workflows and employs predictive analytics to the statistical records to analyze which mobile device components are prone to issues. In another embodiment, the method applies rules to dictate how the statistical records are used to generate dashboard models and views.

In another embodiment, the method detects other issues not associated with the remote control session and provides actions to correct the other issues to mitigate additional remote control sessions.

In an embodiment, a remote management system includes a management console configured to establish a remote control session between the management console and a mobile device. The management console being configured to request device information from the mobile device and configured to send the device information to a dashboard execution service. The dashboard execution service being configured to request a dashboard model from a dashboard model service, the dashboard model based on the device information, wherein the dashboard model is a set of workflows. The dashboard model service being configured to execute the set of workflows on the device information to verify the device information against predetermined values. The dashboard execution service being configured to bind an output data model to a view to create a dashboard notification. The management console configured to display the dashboard notification on the management console on a condition that the device information does not meet the predetermined values, wherein the dashboard notification is a visual representation of a health of the mobile device.

In a system embodiment, the dashboard notification includes corrective actions that can be performed on the mobile device. In a system embodiment, the corrective actions are automatically performed on the mobile device. In a system embodiment, a plurality of dashboard models, a plurality of views and data analysis rules are generated and stored in respective caches.

In a system embodiment, the dashboard execution service being configured to apply statistical data and predictive techniques to influence execution and behavior of workflow as applied to the device information.

In a system embodiment, a data point access system being configured to track re-occurring issues on the mobile device, the data point access system configured to track the corrective actions taken to correct the issues, the data point access system configured to track the results from the corrective actions, and the data point access system configured to learn from tracked issues, corrective actions and results to provide intelligence based corrective actions to the issues.

In a system embodiment, a data point access system being configured to maintain statistical records of executed dashboard models and workflows and the data point access system being configured to employ predictive analytics to the statistical records to analyze which mobile device components are prone to issues.

In a system embodiment, a data point access system configured to apply rules to dictate how the statistical records are used to generate dashboard models and views.

In a system embodiment, the dashboard execution service configured to detect other issues not associated with the remote control session, and the dashboard execution service configured to provide actions to correct the other issues to mitigate additional remote control sessions.

In a dashboard notification system embodiment, the system includes a dashboard execution service configured to request a dashboard model from a dashboard model service, the dashboard model based on device information received from a management console in a remote control session with a mobile device, wherein the dashboard model is a set of workflows. The dashboard model service configured to execute the set of workflows on the device information to verify the device information against predetermined values. The dashboard execution service configured to bind an output data model to a view to create a dashboard notification. The dashboard execution service configured to send the dashboard notification for display on the management console on a condition that the device information does not meet the predetermined values, wherein the dashboard notification is a visual representation of an issue with the mobile device.

In a dashboard system embodiment, a data point access system configured to maintain statistical records of executed dashboard models and workflows and the data point access system configured to employ predictive analytics to the statistical records to analyze which mobile device components are prone to issues.

Detailed embodiments of the instant invention are disclosed herein, however, it is to be understood that the disclosed embodiments are merely exemplary of the invention, which may be embodied in various forms. Therefore, specific functional and structural details disclosed herein are not to be interpreted as limiting, but merely as a basis for the claims and as a representation basis for teaching one skilled in the art to variously employ the present invention in virtually any appropriately detailed structure.

While detailed embodiments of the instant invention are disclosed herein, it is to be understood that the disclosed embodiments are merely exemplary of the invention, which may be embodied in various forms. Therefore, specific functional and structural details disclosed herein are not to be interpreted as limiting, but merely as a basis for the claims and as a representation basis for teaching one skilled in the technology to variously employ the present invention in virtually any appropriately detailed structure.

One skilled in the art will readily appreciate that the present invention is well adapted to carry out the objectives and obtain the ends and advantages mentioned, as well as those inherent therein. The embodiments, methods, procedures and techniques described herein are presently representative of the preferred embodiments, are intended to be exemplary and are not intended as limitations on the scope. Changes therein and other uses will occur to those skilled in the art which are encompassed within the spirit of the invention and are defined by the scope of the appended claims. Although the invention has been described in connection with specific preferred embodiments, it should be understood that the invention as claimed should not be unduly limited to such specific embodiments. Indeed, various modifications of the described modes for carrying out the invention which are obvious to those skilled in the art are intended to be within the scope of the following claims.

Although features and elements are described above in particular combinations, each feature or element can be used alone without the other features and elements or in various combinations with or without other features and elements.

## Claims

1. A method for providing dashboard notifications during a remote control session, the method comprising:
establishing a remote control session between a management console and a mobile device;
requesting device information from the mobile device;
sending the device information to a dashboard execution service;
requesting a dashboard model based on the device information, wherein the dashboard model is a set of workflows;
executing the set of workflows on the device information to verify the device information against predetermined values;
binding an output data model to a view to create a dashboard notification; and
displaying the dashboard notification on the management console on a condition that the device information does not meet the predetermined values, wherein the dashboard notification is a visual representation of a health of the mobile device.

2. The method of claim 1, wherein the dashboard notification includes corrective actions that can be performed on the mobile device.

3. The method of claim 2, wherein the corrective actions are automatically performed on the mobile device.

4. The method of claim 1, further comprising:
applying statistical data and predictive techniques to influence execution and behavior of workflow as applied to the device information.

5. The method of claim 1, further comprising:
tracking re-occurring issues on the mobile device;
tracking the corrective actions taken to correct the issues;
tracking the results from the corrective actions; and
learning from tracked issues, corrective actions and results to provide intelligence based corrective actions to the issues.

6. The method of claim 1, further comprising:
maintaining statistical records of executed dashboard models and workflows; and
employing predictive analytics to the statistical records to analyze which mobile device components are prone to issues.

7. The method of claim 6, further comprising:
applying rules to dictate how the statistical records are used to generate dashboard models and views.

8. The method of claim 1, further comprising:
detecting other issues not associated with the remote control session; and
providing actions to correct the other issues to mitigate additional remote control sessions.

9. A remote management system, comprising:
a management console configured to establish a remote control session between the management console and a mobile device;
the management console configured to request device information from the mobile device;
the management console configured to send the device information to a dashboard execution service;
the dashboard execution service configured to request a dashboard model from a dashboard model service, the dashboard model based on the device information , wherein the dashboard model is a set of workflows;
the dashboard model service configured to execute the set of workflows on the device information to verify the device information against predetermined values;
the dashboard execution service configured to bind an output data model to a view to create a dashboard notification; and
the management console configured to display the dashboard notification on the management console on a condition that the device information does not meet the predetermined values, wherein the dashboard notification is a visual representation of a health of the mobile device.

10. The remote management system of claim 9, wherein the dashboard notification includes corrective actions that can be performed on the mobile device.

11. The remote management system of claim 9, further comprising:
the dashboard execution service configured to apply statistical data and predictive techniques to influence execution and behavior of workflow as applied to the device information.

12. The remote management system of claim 9, further comprising:
a data point access system configured to track re-occurring issues on the mobile device;
the data point access system configured to track the corrective actions taken to correct the issues;
the data point access system configured to track the results from the corrective actions; and
the data point access system configured to learn from tracked issues, corrective actions and results to provide intelligence based corrective actions to the issues.

13. The remote management system of claim 10, further comprising:
a data point access system configured to maintain statistical records of executed dashboard models and workflows; and
the data point access system configured to employ predictive analytics to the statistical records to analyze which mobile device components are prone to issues.

14. The remote management system of claim 13, further comprising:
a data point access system configured to apply rules to dictate how the statistical records are used to generate dashboard models and views.

15. A dashboard notification system, comprising:
a dashboard execution service configured to request a dashboard model from a dashboard model service, the dashboard model based on device information received from a management console in a remote control session with a mobile device, wherein the dashboard model is a set of workflows;
the dashboard model service configured to execute the set of workflows on the device information to verify the device information against predetermined values;
the dashboard execution service configured to bind an output data model to a view to create a dashboard notification; and
the dashboard execution service configured to send the dashboard notification for display on the management console on a condition that the device information does not meet the predetermined values, wherein the dashboard notification is a visual representation of an issue with the mobile device.
